# EUROPÄISCHE PATENTANMELDUNG

(11) **EP 0 938 223 A2**
(43) Veröffentlichungstag der Anmeldung: **25.08.1999**
(21) Anmeldenummer: 99101412.7
(22) Anmeldetag: 26.01.1999
(51) Int. Cl.: H04M 3/42

(54) **Endgerät und Festnetz mit endgeräteunabhängigen Teilnehmern**

(30) Priorität: 18.02.1998 DE 19806820
(71) Anmelder: SIEMENS AKTIENGESELLSCHAFT, 80333 München (DE)
(72) Erfinder: Becher, Reinhard Dr., 81245 München (DE); Linder, Hermann, 84405 Dorfen (DE)

(57) **Zusammenfassung**

Der Gegenstand der Erfindung ist ein Endgerät, welches an ein öffentliches Festnetz (TKN) anschließbar ist und zur Entgegennahme und Speicherung zumindest einer Teilnehmeridentifikation für die Identifizierung jeweils eines endgeräteunabhängigen Teilnehmers (TNA) gegenüber dem Festnetz, sowie zur Anforderung und/oder Entgegennahme von Netzverbindungen für den Teilnehmer (TNA) unter Verwendung der Teilnehmeridentifikation eingerichtet ist. Die Übermittlung der Information betreffend die Erreichbarkeit des endgeräteunabhängigen Teilnehmers (TNA) an das Standortregister (STR) des Festnetzes (TKN) kann in einer Transaktionsverbindung mittels einer die Teilnehmeridentifikation enthaltenden Nachricht erfolgen. Das Standortregister (STR) erstellt und aktualisiert seine Standortinformation betreffend die endgeräteunabhängigen Teilnehmer (TNA) anhand von Nachrichten, welche eine Teilnehmeridentifikation des endgeräteunabhängigen Teilnehmers (TNA) enthalten und welche von dem durch den Teilnehmer (TNA) ausgewählten Endgerät (STL), welchem der Teilnehmer (TNA) seine Teilnehmeridentifikation bzw. sein Teilnehmermodul (SIA) eingegeben hat, in einer Transaktionsverbindung übermittelt werden.

## Beschreibung

Die Erfindung betrifft ein Endgerät, welches an ein öffentliches Festnetz anschließbar ist.

Ebenso betrifft die Erfindung ein öffentliches Festnetz, an welches Endgeräte angeschlossen und in welchem Netzverbindungen zwischen den Endgeräten herstellbar sind.

In Festnetzen wird ein Teilnehmer gewöhnlicherweise über seinen Anschluß, dem eine bestimmte Rufnummer zukommt, identifiziert. Dadurch ist die Vergebührung an den Anschluß gebunden; ein Gespräch von einem anderen Anschluß wird auf ein anderes Gebührenkonto verrechnet. Gleiches gilt für teilnehmerspezifische Profile für Dienstleistungen des Netzanbieters, wie etwa Kurznummern, Anrufbeantworterfunktionen usf. Eine Teilnehmermobilität in einem Festnetz, im Sinne von einer Unabhängigkeit von einem bestimmten Endgerät bzw. Anschluß, ist daher nicht gegeben.

Durch die Verwendung von Kreditkarten kann ein Teilnehmer unabhängig von einem bestimmten Anschluß Gespräche führen. Hier findet die Identifikation über die Kreditkartennummer und gegebenenfalls eine PIN-Nummer, d.i. eine als Zugangscode verwendete persönliche Identifikationsnummer, statt. Diese Lösung wurde freilich primär für einen anonymen Teilnehmer entworfen. Überhaupt ist ein solcher Teilnehmer mit Kreditkarte nicht zuverlässig anrufbar, da sein Standort dem Netz nicht bekannt sein kann. Weiters werden die Kreditkarten- und PIN-Nummer über die Leitung signalisiert und sind an dieser Stelle manipulierbar.

Für ein Festnetz ist es hinsichtlich der oben diskutierten Aspekte eines Teilnehmeranschlusses belanglos, auf welche Anschlußform, z.B. leitungsgebunden oder schnurlos, der Anschluß beruht - der Anschlußweg, etwa über ein bestimmtes Anschaltenetz, ist jedenfalls festgelegt - sowie welcher Art das von dem Teilnehmer auf dem Anschluß verwendete Endgerät ist. Im Rahmen dieser Erfindung wird deshalb nicht zwischen einem Festnetz-Anschluß und dem jeweils daran angeschlossenen Endgerät unterschieden.

Im Mobilnetzen, z.B. dem GSM-Netz, ist es bekannt, die Teilnehmeridentität dadurch endgeräteunabhängig zu realisieren, daß ein Teilnehmer ein Teilnehmermodul erhält, auf dem teilnehmerspezifischen Daten gespeichert sind und bei einem Gespräch an das Netz übermittelt werden. Solche Teilnehmermodule sind als sogenannte SIM-Module ('subscriber identity module') bekannt, welche Teilnehmerdaten z.B. in einem Prozessorchip enthalten. Prinzipiell sind beispielsweise auch SIM-Karten auf der Basis von Magnetstreifen vorstellbar, obgleich dadurch die für Mobilfunknetze erforderlichen Sicherheitsanforderungen nicht abgedeckt werden können. Die in dem SIM-Modul gespeicherten Daten sind unter anderem die Teilnehmeridentitätsdaten, Mobilitätsdaten betreffend den Teilnehmer sowie Authentifizierungs- und Verschlüsselungsalgorithmen. Zu den Teilnehmeridentitätsdaten gehören insbesondere die zur Identifikation des Teilnehmers gegenüber und innerhalb des Telekommunikationsnetzes dienende sogenannte IMSI-Nummer ('International Mobile Subscriber Identification'), welche dem Teilnehmer fest zugeordnet ist und von der Rufnummer des Teilnehmers, z.B. die sogenannte MSISDN-Rufnummer ('Mobile Subscriber Integrated Service Digital Network') des GSM-Netzes, zu unterscheiden ist.

Teilnehmer mit geringer Mobilität, die z.B. zwischen festen Aufenthaltsorten, wie Wohnung, Arbeitsplatz, Freizeitclub od. dgl., mit gegenüber der Aktualisierungsdauer des Aufenthaltsortes langen Aufenthaltszeiten wechseln, ziehen die Verwendung eines Festnetzendgerätes oft der eines Mobilgerätes vor, z.B. wegen der geringeren Kosten, verschiedenen Dienstleistungsprofilen, aber auch oft zur Vermeidung der Hochfrequenzbelastung des Mobilfunks. Wegen der verschiedenartigen Signalisierung der Kennungen in einem Festnetz gegenüber der eines Mobilfunknetzes und der verschiedenartigen technischen Voraussetzungen ist die Implementierung einer Teilnehmermobilität in einem Festnetz mit den Methoden eines Mobilnetzes nicht ohne weiteres durchführbar.

Von Intelligenten Festnetzen her ist die Realisierung einer sogenannten Universellen Persönlichen Telefonnummer (UPT) bekannt, welches eine gewisse Endgeräteunabhängigkeit eines Teilnehmers ermöglicht. Hierbei wählt ein Teilnehmer, welcher auf einem bestimmten Telefon des Intelligenten Netzes erreichbar sein will, eine bestimmte Service-Rufnummer, woraufhin von ihm seine UPT-Nummer, ein PIN-Code sowie die Rufnummer des Telefons abgefragt wird. Wird nun der Teilnehmer unter seiner UPT-Nummer angerufen, erfolgt von der rufenden Vermittlungsstelle aus in dem Intelligenten Netz eine Abfrage an die für die UPT-Verwaltung zuständige Dienststeuerstation, welche der rufenden Vermittlungsstelle die Rufnummer des Telefons, auf dem der UPT-Teilnehmer eingebucht ist, übermittelt. Eine Authentisierung der Person, der den Anruf entgegennimmt, ist hierbei jedoch nicht vorgesehen. Zudem erfolgt der Einbuchungsdialog, insbesondere die Abfrage des PIN-Codes, über das Netz zur Dienststeuerstation in einer Gesprächsverbindung, welche hinsichtlich des Datenschutzes anfällig und unnötigerweise aufwendig ist.

Es ist daher Aufgabe der Erfindung, die Mobilität von Teilnehmern in einem Festnetz zu ermöglichen, in dem Sinne, daß für einen Teilnehmer unabhängig von einem bestimmten Endgerät des Festnetzes teilnehmerspezifische Funktionen wie die Vergebührung und Dienstberechtigungen durchführbar sind. Hierbei soll der Schutz persönlicher Teilnehmerdaten durch geeignete Maßnahmen geleistet werden; insbesondere soll der Austausch von Sicherungscodes, z.B. PIN-Codes, über eine Netzverbindung nach Möglichkeit vermieden werden. Weiters soll hierfür ein Teilnehmermodul wie ein im Mobilfunk verwendetes SIM-Modul anwendbar sein; nach Möglichkeit sollte ein solches SIM-Modul in beiden Netztypen einsetzbar sein.

Die Aufgabe wird von einem Endgerät der eingangs genannten Art gelöst, welches zur Entgegennahme und Speicherung zumindest einer Teilnehmeridentifikation für die Identifizierung jeweils eines endgeräteunabhängigen Teilnehmers gegenüber dem Festnetz, sowie zur Anforderung und/oder Entgegennahme von Netzverbindungen für den Teilnehmer unter Verwendung der Teilnehmeridentifikation eingerichtet ist.

Für Teilnehmer mit geringer Mobilität ergibt sich durch diese Lösung gegenüber der Verwendung eines bekannten Mobilgerätes eine Verringerung des Signalaufwandes sowie eine Entlastung des Mobilfunkverkehrs. Weiters erspart sich ein solcher Teilnehmer gegebenenfalls den Ankauf eines Mobilgerätes. Teilnehmerspezifische Aktionen, z.B. die Einrichtung von Dienstleistungen des Netzes oder die Gebührenverrechnung, können eindeutig einem Teilnehmer, anstatt wie bekannt dem Festnetzanschluß, zugeordnet werden.

Eine bevorzugte Ausführungsform des erfindungsgemäßen Endgerätes, die dem zugeordneten Festnetz die laufende Aktualisierung der Teilnehmerstandorte ermöglicht, ist dazu eingerichtet, dem Festnetz Information betreffend die Erreichbarkeit des endgeräteunabhängigen Teilnehmers in einer Transaktionsverbindung mittels einer die Teilnehmeridentifikation enthaltenden Nachricht zu übermitteln. Die Verwendung von Transaktionsverbindungen, d.s. Verbindungen welche lediglich für dem Austausch von Nachrichten des Signalisierungskanales, wie den D-Kanal des ISDN-Netzes dienen, vereinfacht zudem den erforderlichen Signalisierungsaufwand.

Günstigerweise kann die Teilnehmeridentifikation eine IMSI-Nummer sein, im Sinne einer Kompatibilität mit GSM-Netzen.

Gleichermaßen günstig ist es, wenn die Teilnehmeridentifikation eine dem Teilnehmer zugeordnete Rufnummer ist. Dies liegt den bereits bestehenden ISDN-Standards näher und läßt sich daher in bekannten Protokollen unter geringerem Aufwand realisieren.

Eine bevorzugte Ausführungsform des erfindungsgemäßen Endgerätes weist eine Vorrichtung zur Aufnahme zumindest eines Teilnehmermoduls auf, von welchem die Teilnehmeridentifikation des Teilnehmers beziehbar ist. Der Gebrauch von Teilnehmermodulen, z.B. SIM-Karten, für verschiedene Telekommunikationsnetze unter Einschluß von Festnetzen, erbringt den Vorteil, daß für unterschiedliche Netze mit gegebenenfalls unterschiedlichen Diensten nunmehr gleichartige Sicherheitsmechanismen einsetzbar sind. Dieses kompatible Verhalten dient z.B. der Netzintegration von Fest- und Mobilfunknetzen, etwa ist die gemeinsame Nutzung von Ressourcen, z.B. Netzknoten, erleichtert. Auch ermöglicht die Aufnahme mehrerer Teilnehmermodule die gleichzeitige Erreichbarkeit mehrerer Teilnehmer über ein Endgerät. Wenn im folgenden im Zusammenhang mit einem solchen Endgerät von 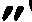 dem" Teilnehmer bzw. 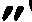 dem" Teilnehmermodul die Rede ist, so erfolgt dies aus Gründen der Deutlichkeit und es wird stets die Möglichkeit mehrerer eingebuchter Teilnehmer bzw. Teilnehmermodule stillschweigend mitberücksichtigt, wobei jeweils die Zuordnung zwischen einem Teilnehmer und seinem Teilnehmermodul fest und eindeutig ist.

Hierbei ist es zur Sicherung des Zuganges zu dem Festnetz günstig, wenn das Endgerät dazu eingerichtet ist, die Berechtigung des Teilnehmers für das Festnetz bei der Entgegennahme des Teilnehmermoduls und/oder bei der Verbindungsherstellung für den Teilnehmer durch den Vergleich eines in dem Teilnehmermoduls gespeicherten Berechtigungscodes mit einem von dem Teilnehmer eingegebenen Code zu überprüfen.

Vorteilhafterweise ist das Endgerät weiters dazu eingerichtet, eine von dem Teilnehmermodul beziehbare Teilnehmerbezeichnung dem Teilnehmer bei der Entgegennahme des Teilnehmermoduls und/oder bei der Herstellung von Netzverbindungen zu bzw. von dem Teilnehmer auszugeben. Diese Teilnehmerbezeichnung dient zur leichteren Identifizierung des Teilnehmers bzw. seines Teilnehmermoduls, und ist insbesondere dann nützlich, wenn mehrere Teilnehmer auf einem Endgerät eingebucht sind.

Günstigerweise verfügt hierbei das Endgerät über eine Anzeige zur Ausgabe der Teilnehmerbezeichnung.

Gleichermaßen günstig zur Unterscheidung verschiedener Teilnehmer ist ein Ruftongeber, welcher zur Ausgabe eines in der Teilnehmerbezeichnung gespeicherten Rufsignales eingerichtet ist.

Es ist weiters oftmals für den Teilnehmer wünschenswert, daß die Vorrichtung zur Aufnahme des Teilnehmermoduls dazu eingerichtet ist, die Teilnehmerbezeichnung des Teilnehmermoduls gemäß durch den Teilnehmer auf dem Endgerät eingegebenen Befehlen zu ändern.

Zudem kann das Endgerät dazu eingerichtet sein, eine für einen Teilnehmer ankommende Verbindung bis zur Eingabe eines Befehles des Teilnehmers zur Verbindungsannahme zu halten, etwa um Abwesenheitsintervalle des Teilnehmer am Ort des Endgerätes zu überbrücken.

Die oben gestellte Aufgabe wird weiters ausgehend von einem Festnetz der eingangs erwähnten Art durch ein Festnetz mit einem Standortregister gelöst, welches eingerichtet ist
- zur Speicherung und/oder Verwaltung von Zuordnungsinformation betreffend die Zuordnung zwischen endgeräteunabhängigen Teilnehmern des Festnetzes einerseits und der durch die endgeräteunabhängigen Teilnehmer jeweils ausgewählten Endgeräten des Festnetzes andererseits,
- zum Erstellen und Aktualisieren der Zuordnungsinformation anhand von Nachrichten, welche eine Teilnehmeridentifikation für die Identifizierung eines endgeräteunabhängigen Teilnehmers gegenüber dem Festnetz enthalten und welche von dem durch den Teilnehmer ausgewählten Endgerät, welchem der Teilnehmer seine Teilnehmeridentifikation eingegeben hat, in einer Transaktionsverbindung übermittelt werden,
- zum Ermitteln von Zielrufnummern, welche die von den endgeräteunabhängigen Teilnehmern jeweils ausgewählten Endgeräte bezeichnen, aus der Zuordnungsinformation, und
- zum Übermitteln der Zielrufnummern an Netzknoten des Festnetzes und an andere mit dem Festnetz verknüpfte Telekommunikationsnetze.

Wie weiter oben bereits diskutiert, ergibt sich für Teilnehmer mit geringer Mobilität durch diese Lösung gegenüber der Verwendung eines bekannten Mobilfunknetzes eine Verringerung des Signalaufwandes sowie eine Entlastung des Mobilfunkverkehrs. Teilnehmerspezifische Aktionen, z.B. die Einrichtung von Dienstleistungen des Netzes oder die Gebührenverrechnung, können eindeutig einem Teilnehmer, anstatt wie bekannt dem Festnetzanschluß, zugeordnet werden. Zugleich ist die laufende Aktualisierung der Teilnehmerstandorte gewährleistet. Die Verwendung von Transaktionsverbindungen, d.s. Verbindungen welche lediglich für dem Austausch von Nachrichten des Signalisierungskanales, wie den D-Kanal des ISDN-Netzes dienen, vereinfacht zudem den erforderlichen Signalisierungsaufwand.

Auch hier kann die Teilnehmeridentifikation günstigerweise eine IMSI-Nummer sein.

Gleichermaßen günstig ist es, wenn die Teilnehmeridentifikation eine dem Teilnehmer zugeordnete Rufnummer ist.

Weiters ist es zur Absicherung einer fehlerfreien Verbindungsherstellung vorteilhaft, wenn die Netzknoten dazu eingerichtet sind, bei der Herstellung einer Teilnehmerverbindung zu einem endgeräteunabhängigen Teilnehmer einen Authentisierungsdialog mit dem von dem Teilnehmer ausgewählten Endgerät durchzuführen.

Die Erfindung wird im folgenden anhand eines Ausführungsbeispieles unter Bezugnahme auf die beigefügten Figuren näher erläutert, welche zeigen:
- Fig. 1: ein erfindungsgemäß ausgeführtes Telefon-Festnetz;
- Fig. 2: einen Signalisierungsablauf eines Einbuchungsvorganges eines Teilnehmers auf einem Endgerät des erfindungsgemäßen Telefonnetzes;
- Fig. 3: einen Signalisierungsablauf eines von dem Teilnehmer eingeleiteten Verbindungsaufbaus; und
- Fig. 4: einen Signalisierungsablauf eines Verbindungsaufbaus eines für den Teilnehmer ankommenden Gesprächs.

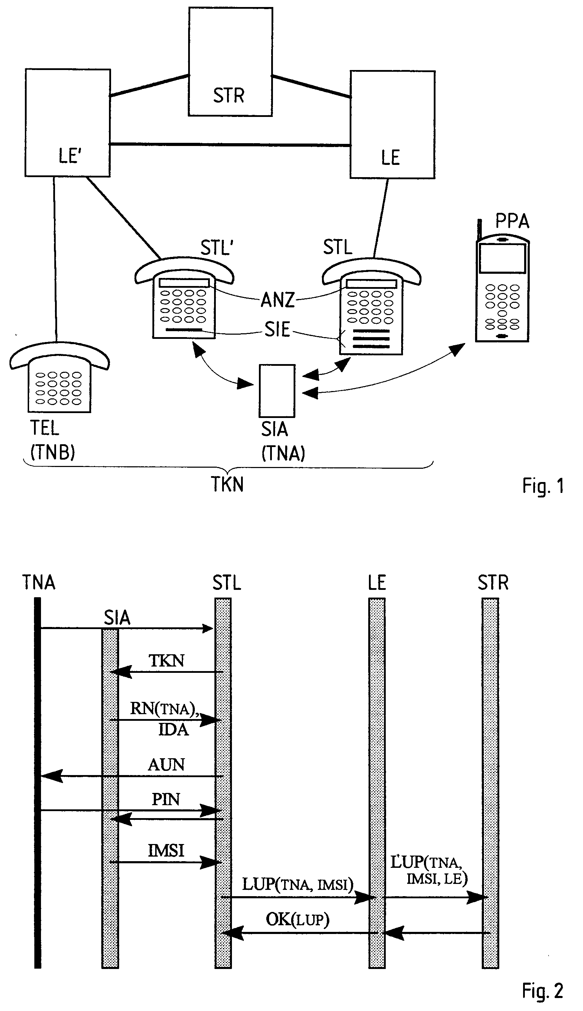

Fig. 1 ist eine diagrammatische Darstellung eines beispielhaftes Festnetz TKN, welches im folgenden als Grundlage der Erläuterung der Erfindung dienen soll. Das Netz TKN sei ein Telefonnetz, insbesondere ein ISDN-Netz. In dem Festnetz sind Endgeräte TEL,STL,STL' der Netzteilnehmer über Festleitungen an Vermittlungsstellen LE,LE' angeschlossen; die exakte Topologie des Netzes ist für die Erfindung naturgemäß belanglos.

Ein Teilnehmer TNA verfüge über ein SIM-Modul SIA, welches er z.B. auf seinem Mobilgerät PPA nach für Mobilfunknetze bekannter Art verwendet. Das Mobilfunkgerät PPA ist kein Endgerät des Festnetzes TKN, sondern eines (in Fig. 1 nicht gezeigten) Mobilfunknetzes. Bisher hat der Teilnehmer TNA keinen direkten Zugang mittels seinen SIM-Moduls zu den Diensten des Festnetzes TKN; ein indirekter Zugang ist in besonderen Fällen über das Mobilgerät PPA und das Mobilfunknetz mit eingeschränkten Nutzungsmöglichkeiten gegeben. Zufolge der Erfindung sind SIM-fähige Endgeräte STL,STL' in dem Festnetzes TKN vorgesehen. Dadurch kann eine Endgeräteunabhängigkeit des Teilnehmers in dem Festnetz TKN verwirklicht werden, d.h. der Teilnehmer TNA ist je nach seinem aktuellen Einbuchungsstandort über wechselnde Endgeräte STL,STL' innerhalb des Festnetzes TKN erreichbar.

Das ISDN-Netz bzw. Festnetz muß zufolge der Erfindung auch Standortinformationen der in ihm roamenden Teilnehmer verwalten, die über SIM-Module auf den Endgeräten STL des Festnetzes eingebucht sind. Die Verwaltung der Standortinformation kann beispielsweise von einem hierfür vorgesehenen Netzknoten ausgeführt werden, der im folgenden als Standortregister STR bezeichnet wird. Seine Funktion entspricht der eines Heimatregisters des GSM-Netzes. Die Funktionen des Standortregisters STR können auch in den Aufgabenbereich einer Dienststeuerstation (service control point) integriert werden. Details der Anschlußkonfiguration, wie etwa Konzentratoren und Anschaltenetze (access nets) der Festnetzanschlüsse, sind in der Zeichnung unterdrückt, da für das Verständnis der Erfindung belanglos; die Festnetzverbindungen, einschließlich der Verknüpfungen der Netzknoten LE,LE',STR des Netzes TKN untereinander, sind daher als einfache Linien gezeichnet.

Ein SIM-fähiges Endgerät wie die SIM-fähigen Telefone STL,STL' der Fig. 1 ist, neben den bekannten Merkmalen eines Festnetz-Endgerätes, z.B. eines Telefongerätes eines ISDN-Festnetzes, mit einer SIM-Einheit SIE ausgestattet, die dazu eingerichtet ist, ein oder mehrere SIM-Module aufzunehmen und mit diesen Daten auszutauschen. Die derzeit gebräuchlichste Form von SIM-Modulen ist die der SIM-Karten, z.B. mit einem Prozessorchip wie von SIM-Karten des GSM-Netzes her bekannt (siehe hierzu GSM-Standard 11.11). Eine solche SIM-Karte wird in einen hierfür vorgesehenen Schlitz der SIM-Einheit SIE eingeschoben, die nach bekannter Art zum Auslesen und/oder schreiben der Informationen der SIM-Karte bzw. im Falle einer mit Prozessor ausgestatteten SIM-Karte zum Datenaustausch eingerichtet ist. Wie in Fig. 1 angedeutet, kann ein Endgerät STL' bzw. dessen SIM-Einheit für die Aufnahme lediglich genau eines SIM-Moduls eingerichtet sein. Es ist jedoch im Rahmen der Erfindung ohne weiteres möglich, daß mehrere Teilnehmer sich über ein SIM-fähiges Endgerät einbuchen, welches hierfür entsprechend ausgestattet ist, wie z.B. das in Fig. 1 dargestellte Endgerät STL, welches bis zu drei SIM-Module aufnehmen kann.

Vorteilhafterweise weist das SIM-fähige Endgerät STL,STL' eine Anzeige ANZ auf, über die das Endgerät Auskunft über die Identität der eingesteckten SIM-Module geben kann. Dies ist besonders dann vorteilhaft, wenn das Endgerät für die Aufnahme mehrerer SIM-Module ausgelegt ist, da dann eindeutig angezeigt werden kann, welches der eingesteckten SIM-Module z.B. für abgehende Anrufe ausgewählt ist. Der Inhalt der Anzeige kann beispielsweise als Liste gegliedert sein, und jedem eingesteckten SIM-Modul ist z.B. eine Zifferntaste des Telefons STL zugeordnet, die bei der Auswahl eines bestimmten SIM-Moduls durch den Teilnehmer gedrückt werden muß. Als Kennung, die auf der Anzeige zur Identifikation des SIM-Moduls angezeigt wird, kann z.B. die Teilnehmeridentifikation des Netzes, also die IMSI-Nummer oder die zugeordnete MSISDN-Nummer verwendet werden. Anstelle dieser der Zifferncodes kann ebenso eine Teilnehmerbezeichnung in Form eines Textes verwendet werden, der von dem Teilnehmer selbst frei vergeben werden kann oder zum Zeitpunkt der SIM-Programmierung dem Teilnehmer vergeben wird. Dieser Text der Teilnehmerbezeichnung wird in dem SIM-Modul gespeichert und dient gleichsam als interner Name des SIM-Moduls gegenüber dem Benutzer; gegenüber dem Netz TKN ist die Teilnehmerbezeichnung bedeutungslos.

Hinsichtlich der in Festnetzen bisher verwendeten Signalisierung sei auf die Standards der Internationalen Telekommunikationsvereinigung (ITU) verwiesen; insbesondere auf die Standards ITU-T Q.931, 'Digital Subscriber Signalling System No. 1, Network Layer: Digital Subscriber Signalling System No. 1 (DSS 1) - ISDN User-Network Interface Layer 3 Specification For Basic Call Control' und ITU-T Q.932, 'Digital Subscriber Signalling System No. 1, Network Layer: Digital Subscriber Signalling System No. 1 (DSS 1) - Generic Procedures For The Control Of ISDN Supplementary Services' hinsichtlich der Signalisierung für Anschaltenetze (primary access, basic access), sowie weiters die UPT-Standards (Universelle Persönliche Telekommunikation) ITU-T F.851, 'Operations and Quality of Service Universal Personal Telecommunication: Universal Personal Telecommunication (UPT) - Service Description (Service Set 1)', ITU-T Q.76, 'General Recommendations On Telephone Switching and Signalling Functions and Information Flows For Services In The ISDN: Service Procedures For Universal Personal Telecommunication - Functional Modelling and Information Flows' und ITU-T Q.1219, 'Intelligent Network: Intelligent Network User's Guide For Capability Set 1'.

Fig. 2 zeigt einen beispielhaften Signalisierungsablauf des Einbuchungsvorganges des Teilnehmers TNA auf dem SIM-fähigen Endgerät STL des in Fig. 1 gezeigten Festnetzes TKN. Es sei angenommen, daß dem in Fig. 1 gezeigte SIM-Modul SIA des Teilnehmers TNA die Nutzungsberechtigung für das Festnetz TKN vergeben ist. Im folgenden wird in der Beschreibung der Signalisierungsabläufe das Endgerät STL stellvertretend für alle weiteren möglichen SIM-fähigen Endgeräte des Festnetzes TKN verwendet.

Der Einbuchungsvorgang wird beispielsweise dadurch eingeleitet, daß der Teilnehmer TNA sein SIM-Modul in einen der Einsteckplätze des Endgerätes STL einschiebt. Dies wird von dem Endgerät STL erkannt, welches dem SIM-Modul SIA die Netzkennung des Netzes TKN übermittelt. Das SIM-Modul SIA überprüft, ob es das Roaming in dem Netz TKN unterstützt. Wenn dies, wie in dem Signalablauf der Fig. 2 angenommen, der Fall ist, übergibt das SIM-Modul dem Endgerät STL eine Kennung zur Identifikation des Teilnehmers TNA, z.B. die Rufnummer des Teilnehmers und/oder günstigerweise durch die Teilnehmerbezeichnung IDA des Teilnehmers TNA. Daraufhin fordert das Endgerät STL den Teilnehmer TNA zur Eingabe seines PIN-Codes auf, z.B. durch Anzeigen einer entsprechenden Aufforderungsmeldung AUN auf der Anzeige ANZ. Die von dem Teilnehmer TNA eingegebene PIN-Kennung wird dem SIM-Modul SIA zur überprüfung weitergegeben. Ist diese Überprüfung positiv, liefert das SIM-Modul die IMSI-Nummer des Teilnehmers TNA, welche in dem Ausführungsbeispiel als Teilnehmeridentifikation gegenüber dem Festnetz dient. Damit ist der Authentisierungsvorgang des Teilnehmer abgeschlossen und der eigentliche Einbuchungsvorgang für den Teilnehmer TNA bzw. sein SIM-Modul SIA auf dem Netz TKN wird eingeleitet.

Das Endgerät STL sendet an die zugeordnete Vermittlungsstelle LE eine 'LocationUpdate'-Nachricht LUP mit der IMSI-Nummer. Die Verwendung einer 'LocationUpdate'-Nachricht LUP ist von Mobilnetzen bekannt und dient zur Information der beteiligten Telekommunikationsnetze hinsichtlich des aktuellen Standortes des roamenden Teilnehmers. Das Signalisieren der dem Mobilnetz entstammenden Nachrichten kann hierbei, falls das Festnetzprotokoll diese oder äquivalente Nachrichten nicht unterstützt, durch Verwendung des Festnetzprotokolles als Transportprotokoll dem Festnetz aufgesetzt werden. Die Vermittlungsstelle LE leitet die erhaltene Standortinformation an das Standortregister STR weiter. In diesem Falle ist die Standortinformation implizit durch die Festnetzrufnummer des verwendeten Anschlusses gegeben. Deshalb wird - anstelle der Identifikation der dem Teilnehmerstandort zugeordneten Vermittlungsstelle wie bei Mobilfunknetzen gebräuchlich - die dem Anschluß des Endgerätes STL zugeordnete Rufnummer dem Standortregister STR übermittelt. Dies erbringt durch das so ermöglichte direkte Routing bei für den Teilnehmer TNA ankommende Rufe den Vorteil einer schnelleren Verbindungsherstellung. Zusätzlich kann die LUP-Nachricht an das Standortregister noch eine Information betreffend der Vermittlungsstelle LE oder dem Anschlußzugang des Endgerätes STL, z.B. als eine für das Routing ankommender Gespräche verwendbare Rufnummer in dem Festnetz, enthalten. Die erfolgreiche Standortaktualisierung wird dem Endgerät STL mit einer entsprechenden Nachricht OK bestätigt. Der Teilnehmer TNA kann nun das Endgerät für ankommende und abgehende Gespräche nutzen.

Falls das SIM-Modul SIA des Teilnehmers TNA das Roaming in dem Netz TKN nicht unterstützt, liefert es, abweichend zu dem anhand Fig. 2 dargestellten Ablauf, anstelle des Bestätigungssignales ein Abbruchsignal. Dem Teilnehmer wird dann eine entsprechende Fehlermeldung ausgegeben, und das SIM-Modul SIA wird von dem Endgerät ausgeworfen bzw. der Teilnehmer TNA zum Entfernen des SIM-Moduls aufgefordert. Auf gleiche Weise reagiert das Endgerät STL, falls die Standortaktualisierung LUP seitens des Netzes TKN, d.h. der Vermittlungsstelle LE, nicht bestätigt wird.

Alternativ zu dem oben gezeigten Ablauf kann bei dem Einbuchungsvorgang das SIM-Modul die Teilnehmerbezeichnung IDA dem Endgerät STL auch schon mit dem ersten Bestätigungssignal, gemeinsam mit der IMSI-Nummer bekanntgeben. In diesem Falle besteht die Möglichkeit, daß das Endgerät den Teilnehmer TNA durch die Anzeige seiner Teilnehmerbezeichnung zur Eingabe der PIN-Kennung auffordert.

Eine andere Variante des Einbuchungsvorganges überspringt die Abfrage des PIN-Codes. In diesem Falle ist die einzige seitens des Teilnehmer TNA zum Einbuchen erforderliche Tätigkeit das Einschieben des SIM-Moduls.

Der Einbuchungsvorgang kann auf demselben Endgerät STL für weitere SIM-Module durchgeführt werden, in Abhängigkeit von der Anzahl der in dem Endgerät vorgesehenen SIM-Steckplätze. Auf diese Weise können mehr als ein Teilnehmer einem Endgeräteanschluß zugeordnet sein. Das Endgerät STL gibt dann günstigerweise auf einer Anzeige eine Liste der Teilnehmerbezeichnungen der eingebuchten Teilnehmer wieder.

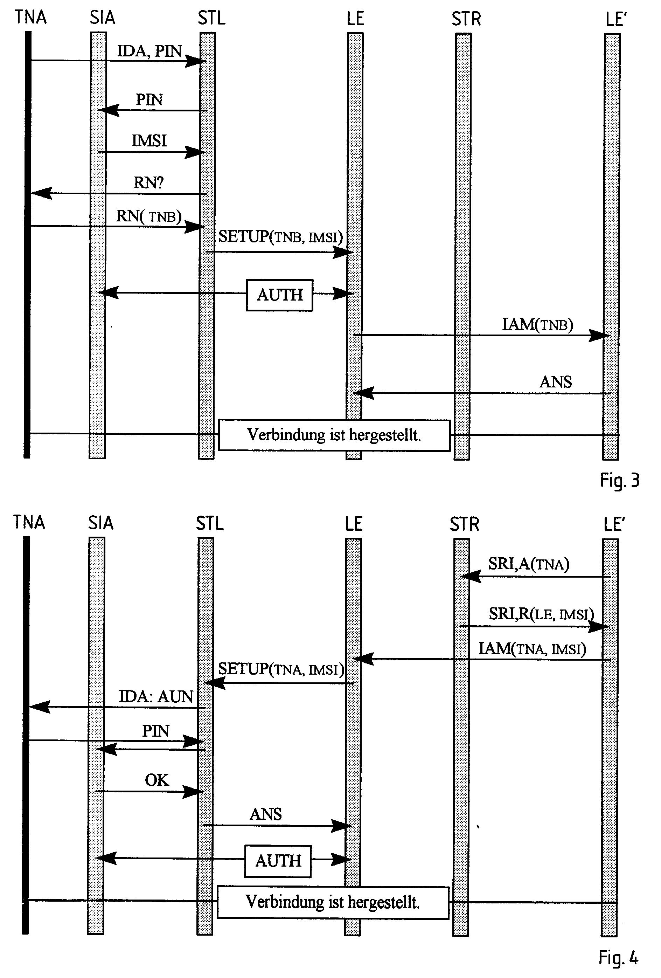

Der Vorgang des Verbindungsaufbaus eines abgehenden Gespräches gemäß der Erfindung ist in dem beispielhaften Signalisierungsablauf der Fig. 3 veranschaulicht. Der Einfachheit halber sei angenommen, daß der Teilnehmer TNA auf dem SIM-fähigen Endgerät STL des in Fig. 1 gezeigten Festnetzes TKN bereits eingebucht ist, etwa gemäß dem in Fig. 2 gezeigten Vorgang.

Der Teilnehmer TNA will nun einen anderen Teilnehmer TNB anrufen, welcher beispielsweise über ein Endgerät TEL verfügt, welches an die Vermittlungsstelle LE' angeschlossen sei. Der Teilnehmer TNA gibt zunächst seine Teilnehmerbezeichnung IDA und seinen PIN-Code ein, um sich auf dem Endgerät STL zu authentisieren. Anstelle der Eingabe der gesamten Teilnehmerbezeichnung IDA ist auch das Auswählen der teilnehmereigenen Bezeichnung aus der auf dem Endgerät angezeigten Liste z.B. durch Drücken einer entsprechend zugeordneten Taste ausreichend. Durch die Eingabe bzw. Auswahl der Teilnehmerbezeichnung IDA deklariert der Teilnehmer TNA seinen Wunsch für die Durchführung eines Anrufes und spezifiziert zugleich das hierbei heranzuziehende SIM-Modul, Der aufzubauende Anruf erfolgt unter Verwendung der dem SIM-Modul SIA bzw. der darin gespeicherten IMSI-Nummer zugeordneten Teilnehmerauthorisierung gegenüber dem Netz. Auf diese Weise werden z.B. die anfallenden Gebühren dem Teilnehmer TNA, und nicht etwa dem Teilnehmer der Festleitung, verrechnet. Die Abfrage der PIN-Kennung stellt die Berechtigung des Teilnehmers sicher; gleichzeitig dient sie als Sicherung z.B. gegen irrtümliche Auswahl einer falschen Teilnehmerbezeichnung aus der angezeigten Liste. Das Endgerät STL fragt die IMSI-Nummer des Teilnehmer TNA von dem SIM-Modul SIA ab, wobei der PIN-Code zur Authentisierung verwendet wird. (Eine inkorrekte PIN-Kennung führt wie bei dem Einbuchungsvorgang zu einem Abbruch und einer Fehlermeldung seitens des Endgerätes STL, eventuell mit einer Aufforderung zu neuerlicher Eingabe des PIN-Codes.) Sodann wird der Teilnehmer zur Eingabe der gewünschten Rufnummer des anderen Teilnehmers TNB aufgefordert.

Nach der Eingabe der zu rufenden Teilnehmernummer durch den Teilnehmer TNA beginnt das Endgerät STL den eigentlichen Gesprächsaufbau. Es signalisiert der Vermittlung LE den Gesprächswunsch, wobei gemäß dem hier behandelten Beispiel eine SETUP-Nachricht der GSM-Signalisierung verwendet wird. Im Gegensatz zu dem für das GSM-Netz bekannten Signalisierungsverfahren wird hierbei als Kennung des anrufenden Teilnehmers die IMSI-Nummer verwendet, wie sie von dem SIM-Modul abgefragt wurde, sowie selbstverständlich die Zielrufnummer des anderen Teilnehmers TNB. Weiters wird die SETUP-Nachricht über den D-Kanal, d.i. der Signalisierungskanal gemäß dem Teilnehmerschnittstellenprotokoll DSS.1 (siehe ITU-T Q.931), des Festnetzprotokolles gesendet. Die Vermittlungsstelle LE führt anhand der von dem Anschluß des Endgerätes STL her eintreffenden Nachricht, die jedoch erfindungsgemäß die Teilnehmeridentifikation, also die IMSI-Nummer, des Teilnehmers TNA enthält, falls notwendig, eine Standortaktualisierung durch sowie bei Bedarf einen Authentisierungsdialog AUTH mit dem Endgerät STL und gegebenenfalls dem zugeordneten Standortregister STR durch. Schließlich wird ein Verbindungsast zu dem zu rufenden Teilnehmer TNB über die diesem zugeordnete Vermittlungsstelle LE' hergestellt und dieser mit dem bestehenden Verbindungsast des anrufenden Teilnehmers TNA durchverbunden.

Der Aufbau des Verbindungsastes zu dem Teilnehmer TNB ist in Fig. 3 lediglich angedeutet, nämlich jeweils durch den einleitenden IAM-Befehl ('Initial Adress Message') und die Meldung ANS ('answer') seitens des Teilnehmers TNB bzw. der ihm zugeordneten Vermittlung LE' zur Bestätigung des Bestehens des Verbindungsastes. Die übrigen Abläufe des Verbindungsaufbaus, z.B. ein Routing über Netzknoten, eine Anfrage bei dem zuständigen Heimatamt oder Durchführung eines Pagings, sind dem Fachmann wohlbekannt und liegen nicht im Gegenstand der Erfindung.

In dem Signalisierungsablauf der Fig. 4 ist der Verbindungsaufbau eines ankommenden Gespräches gemäß der Erfindung beispielhaft gezeigt. Vorausgesetzt sei, daß der nunmehr angerufene Teilnehmer TNA auf dem SIM-fähigen Endgerät STL des in Fig. 1 gezeigten Festnetzes TKN, etwa gemäß dem in Fig. 2 gezeigten Vorgang, eingebucht ist, sodaß das Netz TKN, oder genauer das dem Teilnehmer TNA zugeordneten Standortregister STR, über die aktuelle Standortinformation des Teilnehmers verfügt.

Die Vermittlungsstelle LE' des anrufenden Teilnehmers sendet eine Anforderung der für die Verbindungsherstellung benötigten Routing-Information an das Standortregister STR. Dies kann etwa in Form einer SRI,A-Nachricht ('Send Routing Information, Argument'), wie vom GSM-Netz her bekannt, erfolgen. Das Standortregister STR sendet mit einer SRI,R-Nachricht ('Send Routing Information, Result') die gewünschte Information zurück, welche die Kennung des Festnetzanschlusses und die Teilnehmeridentifikation, also die Rufnummer des Endgerätes STL und die IMSI-Nummer des Teilnehmers TNA enthält, sowie bei Bedarf eine Information betreffend der Vermittlungsstelle LE oder dem Anschlußzugang des Endgerätes STL, zur Unterstützung des Routings der Verbindung. Mit diesen Daten kann die anruferseitige Vermittlung LE' eine IAM-Nachricht mit vollständiger Zielinformation als Anforderung eines Verbindungsastes zu dem angerufenen Teilnehmer TNA an die Vermittlung LE (bzw. dem Anschlußzugang) senden. Dies stellt im Vergleich zu Mobilfunknetzen wie etwa das GSM-Netz eine deutliche Vereinfachung des Signalisierungsverfahrens dar. Die Vermittlung LE ruft das Endgerät STL mit einer SETUP-Nachricht, die erfindungsgemäß die Teilnehmeridentifikation des angerufenen Teilnehmers TNA enthält.

Das Endgerät STL meldet den ankommenden Ruf beispielsweise durch ein Meldesignal AUN und zusätzliches Anzeigen der Teilnehmerbezeichnung IDA des angerufenen Teilnehmers TNA; dieser kann mit der Teilnehmeridentifikation, also die IMSI-Nummer, der SETUP-Nachricht identifiziert werden, etwa dadurch daß das Endgerät die eingesteckten SIM-Module abfragt oder auch anhand des Vergleichs mit einer in einem hierfür reservierten Speicher des Endgeräts angelegten Liste der Teilnehmeridentifikationen. Zugleich fordert das Endgerät STL den Teilnehmer TNA zur Authentisierung, also zur Eingabe seiner PIN-Kennung, auf, und die eingegebene PIN-Kennung wird zu dem betreffenden SIM-Modul SIA zum Zwecke der Überprüfung weitergeleitet. Wenn das SIM-Moduls ein Bestätigungssignal OK gibt, akzeptiert das Endgerät STL den Anruf mittels einer entsprechenden Nachricht ANS an die Vermittlung LE, wodurch die Verbindung hergestellt ist.

Als zusätzliche Sicherheitsvorkehrung kann, wie in Fig. 4 angedeutet, anschließend noch eine Authentisierungsdialog AUTH zwischen dem SIM-Modul SIA und der Vermittlungsstelle LE entsprechend dem vom GSM-Netz her bekannten Verfahren durchgeführt werden. Dies verhindert die fehlerhafte Zustellung eines Gespräches zu einem nicht SIM-fähigen Endgerät, welches jeglichen ankommenden Ruf annehmen würde.

Die Signalisierung, für welchen der auf dem Endgerät STL eingebuchten Teilnehmer der Anruf ankommt, kann auch z.B. durch besondere Elemente der Anzeige verdeutlicht werden, wie etwa Leuchtdioden, die jeweils einem SIM-Modul zugeordnet sind, oder durch akustische Signale, die von einem Ruftongeber zusätzlich oder anstelle des Ruftons gegeben werden und die günstigerweise in der Teilnehmerbezeichnung abgespeichert sind, erfolgen. Diese akustischen Signale können auch Sprachsignale sein, z.B. ein in der Teilnehmerbezeichnung gespeicherter gesprochener Name, wobei diese von dem Endgerät entsprechend ergänzt werden können, z.B. 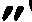 Anruf für (Name)".

Wenn, abweichend von dem in Fig. 4 dargestellten Ablauf, die seitens des angerufenen Teilnehmers eingegebene PIN-Kennung nicht korrekt ist - eventuell auch nach wiederholter Eingabe -, gibt das Endgerät STL eine negative Nachricht an die Vermittlung LE zurück, sodaß der Teilnehmer TNA als nicht erreichbar gilt. Gleiches gilt, falls die SETUP-Nachricht der Vermittlungsstelle LE eine IMSI-Nummer eines auf dem Endgerät STL nicht eingebuchten Teilnehmers enthält. Es ist hierbei zweckmäßig, wenn in diesen Fällen die negative Nachricht zu einer Löschung der Standortinformation in dem Netz TKN führt.

Falls sich der Teilnehmer TNA sich für einen kurzen Zeitraum von dem Endgerät STL entfernt, ist es zweckmäßig, die vorübergehende Abwesenheit dem Endgerät durch einen Befehl, z.B. eine bestimmte Tastenkombination, anzuzeigen. Ankommende Anrufe für den Teilnehmer TNA werden dann zwar von dem Endgerät STL akzeptiert, jedoch gehalten; dem Anrufenden kann z.B. eine Ansage oder Musik eingespielt werden, die ebenfalls in der Teilnehmerbezeichnung IDA gespeichert sein kann. Wenn der Teilnehmer TNA zurückkommt, kann er nach Eingabe seines PIN-Codes das gehaltene Gespräch annehmen.

Als Alternative zu der beschriebenen Verwendung einer IMSI-Nummer als Kennung zur Identifikation des Teilnehmers TNA, wobei die Speicherung der IMSI-Nummer auf der SIM-Karte bekannt ist, ist es möglich, daß eine Rufnummer des Teilnehmers TNA auf dem SIM-Modul gespeichert und bei der Verbindungsherstellung zur Identifikation des Teilnehmers, nämlich in der SETUP-Nachricht an die Vermittlungsstelle LE, verwendet wird. Diese als Teilnehmeridentifikation dienende Rufnummer ist zusätzlich zu oder anstelle der IMSI-Nummer auf dem SIM-Modul gespeichert und wird bei den oben dargestellten Signalisierungsabläufen, insbesondere zwischen den Netzknoten des Festnetzes, anstelle der IMSI-Nummer verwendet. Die Teilnehmeridentifikations-Rufnummer kann eigens für diesen Zweck in dem Festnetz eingerichtet sein. Die Verwendung einer solchen Rufnummer ist vom GSM-Netz her bekannt, wo sie als Basis-MSISDN-Nummer bezeichnet wird; jedoch ist eine Speicherung der Rufnummer auf der SIM-Karte bisher nicht vorgesehen.

Selbstverständlich ist das beschriebene Ausführungsbeispiel nicht die einzige mögliche Ausführungsform der Erfindung, und die in den Fig. 2 bis 4 dargestellten Signalisierungsabläufe haben lediglich Beispielcharakter. Insbesondere sind sie nicht als Einschränkung auf Telekommunikationsverbindungen innerhalb des erfindungsgemäßen Festnetzes zu verstehen. Grundsätzlich könnte etwa anstelle der Netzknoten LE' anstelle einer netzeigenen Vermittlungsstelle auch beispielsweise ein Netzknoten eines fremden, mit dem Festnetz TKN verknüpften Telekommunikationsnetzes sein, an das der andere Teilnehmer TNB angeschlossen ist. Darüber hinaus eignet sich die Erfindung auch für andere Dienste, z.B. Telefax, und für integrierte Telekommunikationsnetze, die etwa feste und mobile Anschlüsse umfassen.

## Patentansprüche

1. Endgerät, welches an ein öffentliches Festnetz (TKN) anschließbar ist,
**dadurch gekennzeichnet,**
daß es zur Entgegennahme und Speicherung zumindest einer Teilnehmeridentifikation für die Identifizierung jeweils eines endgeräteunabhängigen Teilnehmers (TNA) gegenüber dem Festnetz, sowie zur Anforderung und/oder Entgegennahme von Netzverbindungen für den Teilnehmer (TNA) unter Verwendung der Teilnehmeridentifikation eingerichtet ist.

2. Endgerät nach Anspruch 1,
**dadurch gekennzeichnet,** daß es dazu eingerichtet ist, dem Festnetz (TKN) Information betreffend die Erreichbarkeit des endgeräteunabhängigen Teilnehmers (TNA) in einer Transaktionsverbindung mittels einer die Teilnehmeridentifikation enthaltenden Nachricht zu übermitteln.

3. Endgerät nach Anspruch 1 oder 2,
**dadurch gekennzeichnet,** daß die Teilnehmeridentifikation eine IMSI-Nummer ist.

4. Endgerät nach Anspruch 1 oder 2,
**dadurch gekennzeichnet,** daß die Teilnehmeridentifikation eine dem Teilnehmer zugeordnete Rufnummer ist.

5. Endgerät nach einem der Ansprüche 1 bis 4,
**dadurch gekennzeichnet,** daß es eine Vorrichtung (SIE) zur Aufnahme zumindest eines Teilnehmermoduls (SIA) aufweist, von welchem die Teilnehmeridentifikation des Teilnehmers (TNA) beziehbar ist.

6. Endgerät nach Anspruch 5,
**dadurch gekennzeichnet,** daß es dazu eingerichtet ist, die Berechtigung des Teilnehmers für das Festnetz (TKN) bei der Entgegennahme des Teilnehmermoduls (SIA) und/oder bei der Verbindungsherstellung für den Teilnehmer durch den Vergleich eines in dem Teilnehmermoduls gespeicherten Berechtigungscodes mit einem von dem Teilnehmer eingegebenen Code zu überprüfen.

7. Endgerät nach Anspruch 5 oder 6,
**dadurch gekennzeichnet,** daß es dazu eingerichtet ist, eine von dem Teilnehmermodul (SIA) beziehbare Teilnehmerbezeichnung (IDA) dem Teilnehmer (TNA) bei der Entgegennahme des Teilnehmermoduls (SIA) und/oder bei der Herstellung von Netzverbindungen zu bzw. von dem Teilnehmer (TNA) auszugeben.

8. Endgerät nach Anspruch 7,
**gekennzeichnet durch** eine Anzeige (ANZ) zur Ausgabe der Teilnehmerbezeichnung (IDA).

9. Endgerät nach Anspruch 7 oder 8,
**gekennzeichnet durch** einen Ruftongeber, welcher zur Ausgabe eines in der Teilnehmerbezeichnung gespeicherten Rufsignales eingerichtet ist.

10. Endgerät nach einem der Ansprüche 7 bis 9,
**dadurch gekennzeichnet,** daß die Vorrichtung zur Aufnahme des Teilnehmermoduls (SIA) dazu eingerichtet ist, die Teilnehmerbezeichnung (IDA) des Teilnehmermoduls (SIA) gemäß durch den Teilnehmer (TNA) auf dem Endgerät eingegebenen Befehlen zu ändern.

11. Endgerät nach einem der Ansprüche 1 bis 10,
**dadurch gekennzeichnet,** daß das Endgerät dazu eingerichtet ist, eine für einen Teilnehmer ankommende Verbindung bis zur Eingabe eines Befehles des Teilnehmers zur Verbindungsannahme zu halten.

12. Öffentliches Festnetz, an welches Endgeräte (STL,STL') angeschlossen und in welchem Netzverbindungen zwischen den Endgeräten herstellbar sind,
**gekennzeichnet durch**
ein Standortregister (STR), welches eingerichtet ist
- zur Speicherung und/oder Verwaltung von Zuordnungsinformation betreffend die Zuordnung zwischen endgeräteunabhängigen Teilnehmern (TNA) des Festnetzes einerseits und der durch die endgeräteunabhängigen Teilnehmer jeweils ausgewählten Endgeräten (STL) des Festnetzes andererseits,
- zum Erstellen und Aktualisieren der Zuordnungsinformation anhand von Nachrichten, welche eine Teilnehmeridentifikation für die Identifizierung eines endgeräteunabhängigen Teilnehmers (TNA) gegenüber dem Festnetz (TKN) enthalten und welche von dem durch den Teilnehmer (TNA) ausgewählten Endgerät (STL), welchem der Teilnehmer (TNA) seine Teilnehmeridentifikation eingegeben hat, in einer Transaktionsverbindung übermittelt werden,
- zum Ermitteln von Zielrufnummern, welche die von den endgeräteunabhängigen Teilnehmern (TNA) jeweils ausgewählten Endgeräte (STL) bezeichnen, aus der Zuordnungsinformation, und
- zum Übermitteln der Zielrufnummern an Netzknoten (LE,LE') des Festnetzes und an andere mit dem Festnetz verknüpfte Telekommunikationsnetze.

13. Festnetz nach Anspruch 12,
**dadurch gekennzeichnet,** daß die Teilnehmeridentifikation eine IMSI-Nummer ist.

14. Festnetz nach Anspruch 12 oder 13,
**dadurch gekennzeichnet,** daß die Teilnehmeridentifikation eine dem Teilnehmer zugeordnete Rufnummer ist.

15. Festnetz nach einem der Ansprüche 12 bis 14,
**dadurch gekennzeichnet,** daß die Netzknoten (LE,LE') dazu eingerichtet sind, bei der Herstellung einer Teilnehmerverbindung zu einem endgeräteunabhängigen Teilnehmer einen Authentisierungsdialog mit dem von dem Teilnehmer ausgewählten Endgerät (STL) durchzuführen.
